# EUROPÄISCHE PATENTSCHRIFT

(11) **EP 2 390 116 B1**
(45) Veröffentlichungstag und Bekanntmachung des Hinweises auf die Patenterteilung: **31.07.2013**
(21) Anmeldenummer: 11161808.8
(22) Anmeldetag: 11.04.2011
(51) Int. Cl.: B60C 11/13

(54) **Laufstreifenprofil eines Fahrzeugluftreifens**
Run strip profile of a vehicle tyre
Profil de bande de roulement d'un bandage pneumatique de véhicule

(30) Priorität: 27.05.2010 DE 102010017122
(43) Veröffentlichungstag der Anmeldung: 30.11.2011
(73) Patentinhaber: Continental Reifen Deutschland GmbH, 30165 Hannover (DE)
(72) Erfinder: Rittweger, Stefan, 30163, Hannover (DE)
(74) Vertreter: Finger, Karsten

(56) Entgegenhaltungen:
- DE-A1-102009 003 531
- JP-A- 2002 036 822
- JP-A- 2003 063 213
- US-A1- 2001 032 691

## Beschreibung

Die Erfindung betrifft ein Laufstreifenprofil eines Fahrzeugluftreifens mit Umfangsrillen, welche in axialer Richtung A des Reifens Profilblockreihen und/oder Profilrippen begrenzen mit wenigstens einer Profilblockreihe, welche aus in Umfangsrichtung hintereinander angeordneten radial erhabenen Profilblockelementen ausgebildet ist, die jeweils durch quer- oder schrägverlaufende Rillen voneinander getrennt sind, wobei jede dieser Rillen in radialer Richtung R nach innen von einem Rillengrund und in Umfangsrichtung U des Reifens von einer Rillenwand begrenzt wird, die sich radialer Richtung R vom Rillengrund nach außen bis zu der das von ihr begrenzte Profilblockelement nach radial außen begrenzenden Oberfläche erstreckt und die zur Rille hin gerichtete Flanke dieses Profilblockelementes bildet.

Es ist bekannt bei Fahrzeugluftreifen mit Hilfe von Querrillen im Reifenprofil Wasser aus dem Profilbereich abzuleiten und somit die Aquaplaning-Eigenschaften zu verbessern. Hierzu werden die Querrillen teilweise als Schrägrillen ausgebildet, um somit gezielt das Wasser aus den Umfangsrillen heraus abzuleiten. Bei richtungsgebundenen Profilen von Fahrzeugluftreifen werden die Querrillen auf beiden axialen Seiten des Reifens zum Ableiten richtungsoptimiert ausgebildet. Bei nicht richtungsgebundenen Fahrzeugluftreifen ist diese optimierte Ausbildung der Rillenführung zur Ableitung des Wassers nur auf einer axialen Seite möglich.

Aus der JP 2003063213A ist ein von einer Rille begrenztes Profilelement bekannt, bei dem in der radial äußeren Erstreckungshälfte der Rillenwand fünf über die radiale Erstreckung gleichmäßig verteilte Nuten ausgebildet sind, welche sich von der Rillenwand ausgehend in das Profilelement hinein erstrecken.

Der Erfindung liegt die Aufgabe zugrunde die Aquaplaning-Eigenschaften derartiger Fahrzeugluftreifen durch weiter verbesserte Ableitung durch Quer- bzw. Schrägrillen weiter zu verbessern.

Die Aufgabe wird erfindungsgemäß durch die Ausbildung eines Laufstreifenprofils eines Fahrzeugluftreifens mit Umfangsrillen, welche in axialer Richtung A des Reifens Profilblockreihen und/oder Profilrippen begrenzen mit wenigstens einer Profilblockreihe, welche aus in Umfangsrichtung hintereinander angeordneten radial erhabenen Profilblockelementen ausgebildet ist, die jeweils durch quer- oder schrägverlaufende Rillen voneinander getrennt sind, wobei jede dieser Rillen in radialer Richtung R nach innen von einem Rillengrund und in Umfangsrichtung U des Reifens von einer Rillenwand begrenzt wird, die sich radialer Richtung R vom Rillengrund nach außen bis zu der das von ihr begrenzte Profilblockelement nach radial außen begrenzenden Oberfläche erstreckt und die zur Rille hin gerichtete Flanke dieses Profilblockelementes bildet, gemäß den Merkmalen von Anspruch 1 gelöst, bei dem eine Rillenwand längs der gesamten Erstreckung der Rille mit radialem Abstand nach innen von der das begrenzte Profilblockelement nach radial außen begrenzenden Oberfläche und mit radialem Abstand nach radial außen vom Rillengrund der Rille mit einer aus der Rillenwand zur Rille hin erhobenen Rippe ausgebildet ist, die mit ihrer Längserstreckungsrichtung auf der Rillenwand längs der Erstreckung der Rille erstreckt ausgerichtet ist, wobei die Rippe in ihrer Schnittkontur in den senkrecht zur Reifenachse gebildeten Querschnitten sich mit ihren beiden Rippenflanken jeweils aus der Rillenwand erhebt und wobei die Rippe an den von der Rillenwand beabstandeten Enden der Rippenflanken auf der zur Rille hinweisenden Seite mit einer geradlinigen die Rippenflanken verbindenden Schnittlinienkontur der in radialer Richtung R gemessenen Erstreckungshöhe h >0 begrenzt ist.

Die Ausbildung ermöglicht eine verbesserte Führung des abzuleitenden Wassers durch die Quer- bzw. Schrägrille hindurch. Der durch die Rippe ausgebildete Hinterschnitt zwischen Rippe und Rillengrund hält das in die Rille eingedrungene Wasser besser im Bereich des Rillengrundes aus dem Oberflächenbereich des Reifenprofils heraus bei großer Stabilität und Unempfindlichkeit gegen Abrieb der durch die Rippe gebildeten Führungselemente. Bei Anströmung der Querrille auf der mit der Rippe ausgebildeten Rillenwand erfolgt somit eine verbesserte kanalisierte Ableitung des Wassers. Das verbesserte Aquaplaning-Potential ermöglicht zusätzliche Freiheiten bei der Auslegung des Reifens auch zugunsten anderer Reifeneigenschaften.

Besonders vorteilhaft ist die Ausbildung eines Laufstreifenprofils gemäß den Merkmalen von Anspruch 2, wobei die Rillenwand im radialen Erstreckungsbereich zwischen radial äußerer Oberfläche und radial äußerer Rippenflanke in den senkrecht zur Reifenachse ausgebildeten Querschnittsebenen geradlinig unter Einschluss eines Winkels α von 2° ≤ α ≤ 8° zur radialen Richtung R des Reifens geneigt ausgebildet ist.

Besonders vorteilhaft zur Stabilisierung der Rillenwand ist die Ausbildung eines Laufstreifenprofils gemäß den Merkmalen von Anspruch 3, wobei die Rillenwand im radialen Erstreckungsbereich zwischen Rillengrund und radial innerer Rippenflanke in den senkrecht zur Reifenachse ausgebildeten Querschnittsebenen geradlinig unter Einschluss eines Winkels β von 30° ≤ β ≤ 60° zur radialen Richtung R des Reifens geneigt ausgebildet ist. Darüber Hinaus wird hierdurch eine einfache Ausformbarkeit begünstigt.

Besonders vorteilhaft ist die Ausbildung eines Laufstreifenprofils gemäß den Merkmalen von Anspruch 4, wobei die Rillenwand im radialen Erstreckungsbereich zwischen Rillengrund und radial innerer Rippenflanke in den senkrecht zur Reifenachse ausgebildeten Querschnittsebenen um einen auf der von der Rillenwand zur Rille weisenden Seite liegenden Krümmungsmittelpunkt M₁ gekrümmt ausgebildet ist. Hierdurch kann eine Minimierung der Kerbwirkung einfach ermöglicht werden.

Besonders vorteilhaft ist die Ausbildung eines Laufstreifenprofils gemäß den Merkmalen von Anspruch 5, wobei die Rillenwand im radialen Erstreckungsbereich zwischen radial äußerer Oberfläche und radial äußerer Rippenflanke in den senkrecht zur Reifenachse ausgebildeten Querschnittsebenen über eine in radialer Richtung R gemessene Höhe hₐ und die Rillenwand im radialen Erstreckungsbereich zwischen Rillengrund und radial innerer Rippenflanke über eine in radialer Richtung R gemessene Höhe hᵢ erstreckt mit (1,1 hₐ) ≥ hᵢ ≥ (0,9 hₐ). Hierdurch ergibt sich eine Positionierung der Rippe, die eine hohe Funktionssicherheit bei guter Sichtbarkeit ermöglicht. Die gute Sichtbarkeit ermöglicht eine visuelle Kontrolle des Zustandes sowie die Ableitung einer Information über den Abriebszustand des Reifens.

Besonders vorteilhaft ist die Ausbildung eines Laufstreifenprofils gemäß den Merkmalen von Anspruch 6, wobei die Erstreckungshöhe h mit 1mm:≤ h ≤ 3mm ausgebildet ist. Hierdurch wird eine ausreichende Stabilität der Rippe bei geringem hierfür bereitzustellendem Volumen in der Rille ermöglicht.

Besonders vorteilhaft zur Erzielung einer hohen Stabilität der Rippe ist die Ausbildung eines Laufstreifenprofils gemäß den Merkmalen von Anspruch 7, wobei die radial äußere Rippenflanke ausgehend von der Rillenwand zur Rille hin mit einem Winkel γ zur Umfangsrichtung U nach radial außen geneigt und die radial innere Rippenflanke ausgehend von der Rillenwand zur Rille hin mit einem Winkel δ zur Umfangsrichtung U nach radial außen geneigt verlaufend ausgebildet ist mit δ > γ.

Besonders vorteilhaft zur Stabilisierung der Rippe mit geringem Materialverbrauch ist die Ausbildung eines Laufstreifenprofils gemäß den Merkmalen von Anspruch 8, wobei längs der Erstreckung der Querrille im Abstand d - insbesondere mit 15mm ≤ d ≤ 30mm - voneinander radial oberhalb und/oder radial unterhalb der Rippe zusätzliche in radialer Richtung erstreckte stegförmige Erhöhungen in der Rillenwand ausgebildet sind, die sich ausgehend von der Rippe in radialer Richtung erstrecken.

Besonders vorteilhaft ist die Ausbildung eines Laufstreifenprofils gemäß den Merkmalen von Anspruch 9, wobei die stegförmigen Erhöhungen ihre maximale Steghöhe an der Rippenflanke aufweisen und die Steghöhe längs der radialen Erstreckung mit zunehmendem Abstand zur Rippenflanke abnimmt, wobei die Steghöhe in jeder radialen Position des Reifens die jeweilige maximale Erhebungshöhe zur Rillenwand ist.

Die Erfindung wird im Folgenden an Hand der in den Figuren 1 bis 6 dargestellten Ausführungsbeispiele näher erläutert. Hierin zeigen
- Fig. 1: eine Draufsicht auf einen Abschnitt eines Laufstreifenprofils eines Fahrzeugluftreifens,
- Fig. 2: die Querschnittsdarstellung einer Querrille des Laufstreifenprofils von Fig. 1 gemäß Schnitt II-II von Fig. 1,
- Fig. 3: die Querschnittsdarstellung einer Querrille mit alternativer Rillenwandgestaltung gemäß Schnitt II-II von Fig. 1,
- Fig. 4: die Querschnittsdarstellung einer Rillenwand der Querrille von Fig.2 gemäß Schnitt IV-IV von Fig. 1,
- Fig. 5: die Querschnittsdarstellung einer Querrille mit weiterer alternativer Rillenwandgestaltung gemäß Schnitt II-II von Fig. 1,
- Fig. 6: die Querschnittsdarstellung einer Rillenwand der Querrille gemäß Schnitt IV-IV mit der Rille von Fig. 5.

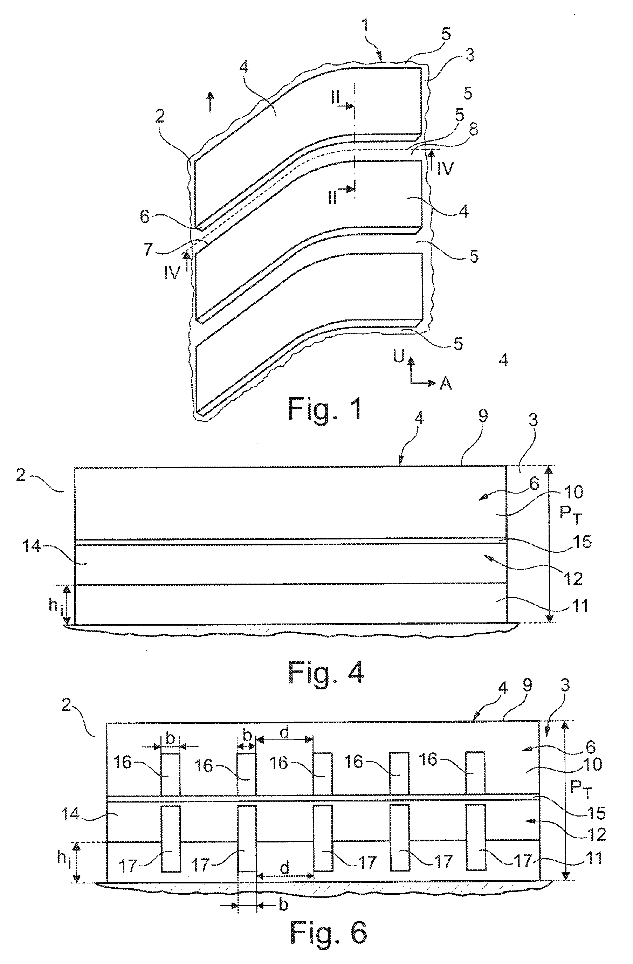

Die Figuren 1, 2 und 4 zeigen einen Ausschnitt eines Laufstreifenprofils mit einer Profilblockreihe 1, welche aus in Umfangsrichtung U des Fahrzeugluftreifens hintereinander angeordneten und jeweils durch Querrillen 5 voneinander beabstandeten Profilblockelementen 4 ausgebildet ist. Die Profilblockreihe 1 wird in axialer Richtung A zu beiden Seiten hin jeweils von einer Umfangsrille 2 bzw. von einer Umfangsrille 3, welche sich über den gesamten Umfang des Fahrzeugluftreifens in Umfangsrichtung U geradlinig erstrecken, axial begrenzt. Die Profilblockelemente 4 der Profilblockreihe 1 werden in radialer Richtung R des Fahrzeugluftreifens nach außen von einer die Straßenkontaktoberfläche bildenden radial äußeren Oberfläche 9 begrenzt. Die Querrillen 5 werden in radialer Richtung R nach innen von einem sich über die gesamte axiale Erstreckung der jeweiligen Querrille 5 erstreckenden Rillengrund 8 begrenzt. Jede Querrille 5 wird in Umfangsrichtung U zu dem einen an die Querrille 5 angrenzenden Profilblockelement 4 hin von einer Rillenwand 6 begrenzt, welche sich in radialer Richtung vom Rillengrund 8 nach außen bis zu der radial äußeren Oberfläche 9 des Profilblockelementes 4 erstreckt. Die Rillenwand 6 bildet dabei die zur Querrille 5 gerichtete Flanke dieses Profilblockelementes 4. Jede Querrille 5 wird in Umfangsrichtung U gesehen jeweils zu dem zweiten an die Querrille 5 angrenzenden Profilblockelement 4 hin von einer Rillenwand 7 begrenzt, welche sich in radialer Richtung R vom Rillengrund 8 nach außen bis zu der radial äußeren Oberfläche 9 dieses Profilblockelementes 4 erstreckt. Die Rillenwand 7 bildet dabei gleichzeitig die ur Querrille 5 gerichtete Flanke dieses Profilblockelementes 4.

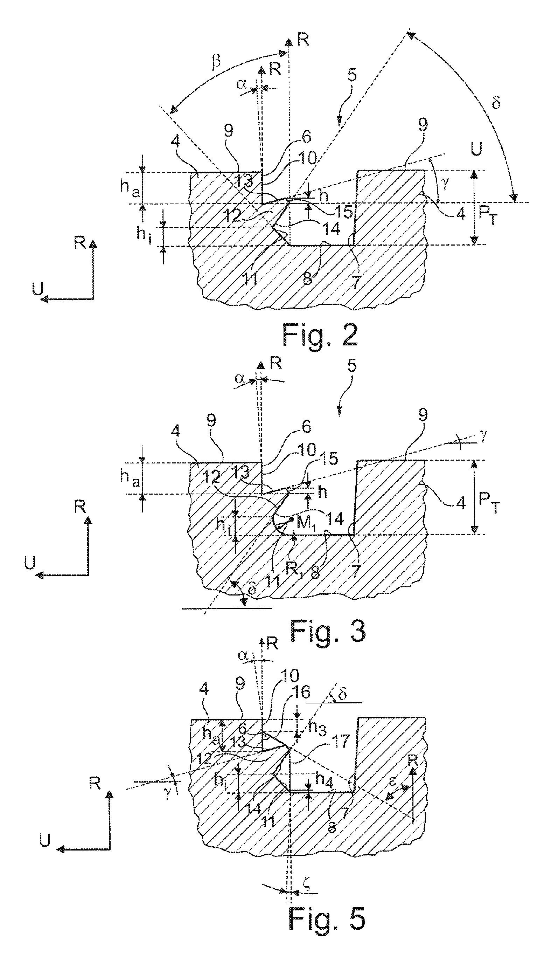

Die Rillenwand 7 der Querrille 5 ist dabei - wie in Fig.2 dargestellt ist - jeweils in den senkrecht zur Reifenachse ausgebildeten Querschnittsebenen mit einer geradlinigen Kontur unter einem Neigungswinkel von 0° bis 10° - bevorzugt 2° bis 8° - zur radialen Richtung R ausgerichtet.

Die Rillenwand 6 ist - wie in Fig.2 zu erkennen ist - ausgehend vom Rillengrund 8 mit einem radial inneren Erstreckungsbereich 11 der in radialer Richtung R gemessenen Höhe hᵢ und mit einem ausgehend von der radial äußeren Oberfläche 9 nach radial innen ausgebildeten radial äußeren Erstreckungsbereich 10 der radialen Erstreckungshöhe hₐ ausgebildet mit (1,1 ha) ≥ hᵢ ≥ (0,9 hₐ). Im dargestellten Ausführungsbeispiel ist hₐ = hᵢ gewählt.

Zwischen dem radial äußeren Erstreckungsbereich 10 und dem radial inneren Erstreckungsbereich 11 ist eine entlang der Querrille 5 über deren gesamte Erstreckung verlaufende Rippe 12 ausgebildet, welche sich aus der Rillenwand 6 in die Rille 5 hinein erhebt. Die Rippe 12 ist nach radial außen mit einer über die gesamte Erstreckungsläge der Querrille 5 erstreckten Rippenflanke 13 und nach radial innen mit einer über die gesamte Erstreckungslänge der Querrille 5 erstreckten Rippenflanke 14 ausgebildet. Die Rippe 12 ist an ihrer zur Rille 5 hin weisenden Seite von einer in den Querschnittsebenen senkrecht zur Reifenachse mit geradliniger Querschnittskontur ausgebildeten Oberfläche 15 mit einer in radialer Richtung R gemessenen Erstreckungshöhe h mit 1mm ≤ h ≤ 3mm ausgebildet. Im dargestellten Ausführungsbeispiel ist h = 2mm gewählt. Die Rippenflanke 13 erstreckt sich in den senkrecht zur Reifenachse ausgebildeten Querschnittsebenen ausgehend von der Oerfläche 15 geradlinig unter Einschluss eines Winkels γ zur Umfangsrichtung U bis zum radial inneren Erstreckungsende des radial äußeren Erstreckungsbereichs 10 der Rillenwand 6. Die Rippenflanke 14 erstreckt sich in den Querschnittsebenen senkrecht zur Reifenachse ausgehend von der Oerfläche 15 unter Einschluss eines Winkels δ zur Umfangsrichtung U bis zum radial äußeren Erstreckungsende des radial inneren Erstreckungsbereichs 11 der Rillenwand 6. Ausgehend von der Rillenwand 6 bis zur Oberfläche 15 ist sowohl die radial äußere Rippenflanke 13 als auch die radial innere Rippenflanke 14 in radialer Richtung R nach außen geneigt. Die Neigungswinkel δ und γ sind mit δ > γ ausgebildet. Der Neigungswinkel δ ist mit 45°≤ δ ≤ 65° - beispielsweise mit δ =55° - ausgebildet. Der Neigungswinkel γ ist mit 5°≤ γ ≤ 25° - beispielsweise mit γ =15° - ausgebildet.

Die Querrille 5 ist mit einer ausgehend vom Rillengrund 8 in radialer Richtung R nach außen bis zu der radial äußeren Oberfläche 9 der beiden durch die Querrille 5 voneinander getrennten Profilblockelemente 4 erstreckten Profiltiefe P_{T} ausgebildet mit beispielsweise P_{T}=9mm.

Der radial äußere Erstreckungsbereich 10 der Rillenwand 6 ist in den Querschnittsebenen senkrecht zur Reifenachse geradlinig unter Einschluss eines Winkels α zur radialen Richtung R geneigt ausgebildet mit 2° ≤ α ≤ 8°. Beispielsweise ist α = 5° gewählt. Im dargestellten Ausführungsbeispiel von Fig. 2 ist der radial innere Erstreckungsbereich 11 in den Querschnittsebenen senkrecht zur Reifenachse ebenfalls geradlinig unter Einschluss eines Winkels β zur radialen Richtung R ausgebildet mit 30° ≤ β ≤ 60°. Beispielsweise ist β = 45° gewählt.

Die Neigung des radial inneren Erstreckungsbereiches 11 und des radial äußeren Erstreckungsbereiches 10 ist dabei jeweils so gewählt, dass die Rillenwand 6 ausgehend von radial innen nach radial außen von der Rille weg geneigt ausgebildet ist.

Fig. 3 zeigt eine alternative Ausführung, bei der die Querrille 5 wie die in den Figuren 1, 2 und 4 dargestellte Querrille ausgebildet ist, wobei jedoch der radial innere Erstreckungsbereich 11 der Rillenwand 6 in den Querschnittsebenen senkrecht zur Reifenachse in seiner Schnittkontur jeweils um einen auf der von der Rillenwand 6 zur Querrille 5 hin liegenden Seite angeordneten Krümmungsmittelpunkt M₁ mit einem Krümmungsradius R₁ gekrümmt verlaufend ausgebildet ist. Der Krümmungsradius R₁ ist dabei mit 2mm ≤ R₁ ≤4mm - beispielsweise mit R₁ = 3mm - gewählt.

Die Figuren 5 und 6 zeigen eine weitere alternative Ausführung, bei der die Querrille 5 wie die in den Figuren 1, 2 und 4 dargestellte Querrille ausgebildet ist, wobei jedoch zusätzlich radial außerhalb der Rippe 12 stegförmige Erhöhungen 16 und radial unterhalb der Rippe 12 stegförmige Erhöhungen 17 ausgebildet sind, wobei sich die Stege 16 und die Stege 17 jeweils in radialer Richtung R erstrecken. Die Stege 16 und die Stege 17 sind mit einer in Erstreckungsrichtung der Querrille 5 gesehen mit einer Stegbreite b ausgebildet. Benachbarte Stege 16 sind jeweils zueinander in Erstreckungsrichtung der Querrille 5 gesehen mit einem Abstand d zueinander ausgebildet. Benachbarte benachbarte Stege 17 sind jeweils zueinander in Erstreckungsrichtung der Querrille 5 gesehen mit einem Abstand d zueinander ausgebildet. Die Stege 16 erstrecken sich jeweils ausgehend von der radial äußeren Rippenflanke 13 der Rippe 12 an der Rillenwand 6 nach außen bis in einen in radialer Richtung R gemessenen Abstand h₃ von der radial äußeren Oberfläche 9 mit 9mm < h₃ < hₐ. Die Stege 17 erstrecken sich jeweils ausgehend von der radial inneren Rippenflanke 14 der Rippe 12 entlang der Rillenwand 6 nach innen bis einen in radialer Richtung R gemessenen Abstand h₄ vom Rillengrund 8 der Querrille mit 0mm ≤ h₄ ≤ hᵢ.

Der Steg 16 ist jeweils mit seiner zur Rillenwand 7 der Querrille 5 weisenden Oberfläche unter einem Neigungswinkel ε zur Radialen R des Reifens ausgebildet. Die Steghöhe des Steges 16 ist in jeder radialen Position R des Reifens die jeweilige maximale Erhebungshöhe des Steges 16 senkrecht von der Rillenwand 6 im radial äußeren Erstreckungsbereich 10 der Rillenwand 6. Der Steg 16 weist seine maximale Steghöhe an der Rippenflanke 13 auf. Die Steghöhe des Steges 16 nimmt längs der radialen Erstreckung mit zunehmenden Abstand zur Rippenflanke 13 ab und ist im Abstand h₃ von der radial äußeren Mantelfläche 9 gleich Null Millimeter.

Der Steg 17 ist jeweils mit seiner zur Rillenwand 7 der Querrille 5 hinweisenden Oberfläche unter einem Neigungswinkel ζ zur Radialen R geneigt ausgebildet. Die Steghöhe des Steges 17 ist in jeder radialen Position R des Reifens die jeweilige maximale Erhebungshöhe des Steges 17 senkrecht von der Rillenwand 6 im radial inneren Erstreckungsbereich 11 der Rillenwand 6. Der Steg 17 weist seine maximale Steghöhe an der Rippenflanke 14 auf. Die Steghöhe des Steges 17 nimmt längs der radialen Erstreckung mit zunehmendem Abstand zur Rippenflanke 14 ab und ist im Abstand h₄ vom Rillengrund 8 gleich Null Millimeter.

Die Winkel ε und ζ sind dabei mit 45° ≤ ε ≤ 75° und 5° ≤ ζ ≤ 35° gewählt. Beispielsweise ist ε = 45° und ζ = 30° gewählt.

Die Stege 16 und 17 sind dabei mit einer Breite b mit 1 mm≤b≤5mm ausgebildet. Beispielsweise ist b = 2 mm gewählt. Benachbarte Stege 16 bzw. benachbarte Stege 17 sind mit einem Abstand d zueinander ausgebildet mit 15 mm ≤ d ≤ 30 mm. Beispielsweise ist d = 20 mm gewählt.

In einem Ausführungsbeispiel sind die Abstände d Stege einer Querrille 5 dabei jeweils gleich gewählt. In einem anderen, nicht dargestellten Ausführungsbeispiel variieren die Abstände d über die Querrille 5 hinweg.

Im dargestellten Ausführungsbeispiel ist jeweils ein Steg 16 in genau der gleichen Längserstreckungsposition der Querrille 5 angeordnet wie ein Steg 17. In anderer nicht dargestellter Ausführungsform sind die Stege 16 jeweils in unterschiedlichen Position innerhalb der Längserstreckung der Querrille 5 als die Stege 17 ausgebildet.

Fig. 1 zeigt Querrillen 5, welche ausgehend von der Umfangsrille 2 in Richtung zur Umfangsrille 3 hin zunächst einen schrägen Rillenverlauf mit einer Neigung zur axialen Richtung A und somit eine Umfangsrichtungskomponente aufweisen und dann im Anschluss an einen Knick ohne Neigung einen Rillenverlauf in axialer Richtung ohne Umfangsrichtungskomponente aufweisen.

In anderer nicht dargestellter Ausführung sind derartige Querrillen 5 über ihren gesamten Erstreckungsbereich als Schrägrille mit Umfangsrichtungskomponente und mit axialer Richtungskomponente ausbildet. In anderer nicht dargestellter Ausführung sind die Querrillen 5 über ihre gesamte Erstreckung nur mit axialer Richtungskomponente ohne Umfangsrichtungskomponente in ihrem Erstreckungsverlauf ausgebildet.

### Bezugszeichenliste

### (Teil der Beschreibung)

- 1: Profilblockreihe
- 2: Umfangsrille
- 3: Umfangsrille
- 4: Profilblockelement
- 5: Querrille
- 6: Rillenwand
- 7: Rillenwand
- 8: Rillengrund
- 9: Radial äußere Oberfläche
- 10: Radial äußerer Erstreckungsbereich
- 11: Radial innerer Erstreckungsbereich
- 12: Rippe
- 13: Radial äußere Rippenflanke
- 14: Radial innere Rippenflanke
- 15: Rippenfläche
- 16: Steg
- 17: Steg

## Patentansprüche

1. Laufstreifenprofil eines Fahrzeugluftreifens mit Umfangsrillen, welche in axialer Richtung A des Reifens Profilblockreihen (1) und/oder Profilrippen begrenzen mit wenigstens einer Profilblockreihe (1), welche aus in Umfangsrichtung U hintereinander angeordneten radial erhabenen Profilblockelementen (4) ausgebildet ist, die jeweils durch quer- oder schrägverlaufende Rillen (5) voneinander getrennt sind, wobei jede dieser Rillen (5) in radialer Richtung R nach innen von einem Rillengrund (8) und in Umfangsrichtung U des Reifens von einer Rillenwand (6,7) begrenzt wird, die sich radialer Richtung R vom Rillengrund nach außen bis zu der das von ihr begrenzte Profilblockelement (4) nach radial außen begrenzenden Oberfläche (9) erstreckt und die zur Rille (5) hin gerichtete Flanke dieses Profilblockelementes (4) bildet,
**dadurch gekennzeichnet,**
**dass** längs der gesamten Erstreckung der Rille (5) **eine Rillenwand (6)** von der das begrenzte Profilblockelement (4) nach radial außen begrenzenden Oberfläche (9) **in einem Abstand nach radial innen** und vom Rillengrund (8) der Rille (5) **in einem Abstand nach radial außen** mit einer aus der Rillenwand (6) zur Rille (5) hin erhobenen Rippe (12) ausgebildet ist, die mit ihrer Längserstreckungsrichtung auf der Rillenwand (6) längs der Erstreckung der Rille (5) erstreckt ausgerichtet ist, wobei die Rippe (12) in ihrer Schnittkontur in den senkrecht zur Reifenachse gebildeten Querschnitten sich mit ihren beiden Rippenflanken (13,14) jeweils aus der Rillenwand (6) erhebt und wobei die Rippe (12) an den von der Rillenwand (6) beabstandeten Enden der Rippenflanken (13,14) auf der zur Rille (5) hinweisenden Seite mit einer geradlinigen die Rippenflanken (13,14) verbindenden Schnittlinienkontur (15) der in radialer Richtung R gemessenen Erstreckungshöhe h >0 begrenzt ist.

2. Laufstreifenprofil gemäß den Merkmalen von Anspruch 1,
wobei die Rillenwand (6) im radialen Erstreckungsbereich (10) zwischen radial äußerer Oberfläche (9) und radial äußerer Rippenflanke (13) in den senkrecht zur Reifenachse ausgebildeten Querschnittsebenen geradlinig unter Einschluss eines Winkels α von 2° ≤ α ≤ 8° zur radialen Richtung R des Reifens geneigt ausgebildet ist.

3. Laufstreifenprofil gemäß den Merkmalen von einem der vorangegangenen Ansprüche,
wobei die Rillenwand (6) im radialen Erstreckungsbereich zwischen Rillengrund (8) und radial innerer Rippenflanke (14) in den senkrecht zur Reifenachse ausgebildeten Querschnittsebenen geradlinig unter Einschluss eines Winkels β von 30° ≤ β ≤ 60° zur radialen Richtung R des Reifens geneigt ausgebildet ist.

4. Laufstreifenprofil gemäß den Merkmalen von einem der Ansprüche 1 bis 2,
wobei die Rillenwand (6) im radialen Erstreckungsbereich (11) zwischen Rillengrund (8) und radial innerer Rippenflanke (14) in den senkrecht zur Reifenachse ausgebildeten Querschnittsebenen um einen auf der von der Rillenwand (6) zur Rille (5) weisenden Seite liegenden Krümmungsmittelpunkt M₁ gekrümmt ausgebildet ist.

5. Laufstreifenprofil gemäß den Merkmalen von einem der vorangegangenen Ansprüche,
wobei die Rillenwand (6) im radialen Erstreckungsbereich (10) zwischen radial äußerer Oberfläche (9) und radial äußerer Rippenflanke(13) in den senkrecht zur Reifenachse ausgebildeten Querschnittsebenen über eine in radialer Richtung R gemessene Höhe hₐ und die Rillenwand (6) im radialen Erstreckungsbereich (11) zwischen Rillengrund (8) und radial innerer Rippenflanke (14) über eine in radialer Richtung R gemessene Höhe hᵢ erstreckt mit (1,1 hₐ) ≥ hᵢ ≥ (0,9 hₐ).

6. Laufstreifenprofil gemäß den Merkmalen von einem der vorangegangenen Ansprüche,
wobei die Erstreckungshöhe h mit 1mm ≤ h ≤ 3mm ausgebildet ist.

7. Laufstreifenprofil gemäß den Merkmalen von einem der vorangegangenen Ansprüche,
wobei die radial äußere Rippenflanke (13) ausgehend von der Rillenwand (6) zur Rille (5) hin mit einem Winkel γ zur Umfangsrichtung U nach radial außen geneigt und die radial innere Rippenflanke (14) ausgehend von der Rillenwand (6) zur Rille (5) hin mit einem Winkel δ zur Umfangsrichtung U nach radial außen geneigt verlaufend ausgebildet ist mit δ > γ.

8. Laufstreifenprofil gemäß den Merkmalen von einem der vorangegangenen Ansprüche,
wobei längs der Erstreckung der Querrille (5) im Abstand d - insbesondere mit 15mm ≤ d ≤ 30mm - voneinander radial oberhalb und/oder radial unterhalb der Rippe (12) zusätzliche in radialer Richtung R erstreckte stegförmige Erhöhungen (16,17) in der Rillenwand (6) ausgebildet sind, die sich ausgehend von der Rippe (12) in radialer Richtung R erstrecken.

9. Laufstreifenprofil gemäß den Merkmalen von einem der vorangegangenen Ansprüche,
wobei die stegförmigen Erhöhungen (16,17) ihre maximale Steghöhe an der Rippenflanke (13,14) aufweisen und die Steghöhe längs der radialen Erstreckung mit zunehmendem Abstand zur Rippenflanke (16,17) abnimmt, wobei die Steghöhe in jeder radialen Position des Reifens die jeweilige maximale Erhebungshöhe zur Rillenwand (6) ist.

## Claims

1. Tread profile of a pneumatic vehicle tyre with circumferential grooves, which in the axial direction A of the tyre delimit rows of profile blocks (1) and/or profile ribs, with at least one row of profile blocks (1) that is formed by radially raised profile block elements (4), which are arranged one behind the other in the circumferential direction U and are respectively separated from one another by transversely or obliquely running grooves (5), each of these grooves (5) being bounded in the radial direction R inwardly by a groove base (8) and in the circumferential direction U of the tyre by a groove wall (6, 7), which extends in the radial direction R from the groove base outwardly as far as the surface (9) bounding radially outwardly the profile block element (4) delimited by it and forms the flank of this profile block element (4) that is directed towards the groove (5), **characterized in that**, along the entire extent of the groove (5), a groove wall (6) is formed with a rib (12) raised out from the groove wall (6) towards the groove (5) at a distance radially inward from the surface (9) bounding the delimited profile block element (4) radially outwardly and at a distance radially outward from the groove base (8) of the groove (5), which rib is aligned so as to extend with its longitudinal direction of extent on the groove wall (6) along the extent of the groove (5), the rib (12) in its sectional contour, in the cross sections formed perpendicularly to the tyre axis, rising up with its two rib flanks (13, 14) respectively from the groove wall (6) and the rib (12) being delimited at the ends of the rib flanks (13, 14), at a distance from the groove wall (6), on the side facing the groove (5), by a straight intersectional contour (15), joining the rib flanks (13, 14), of the height of extent, measured in the radial direction R, of h > 0.

2. Tread profile according to the features of Claim 1, the groove wall (6) being formed in the radial region of extent (10) between the radially outer surface (9) and the radially outer rib flank (13), in the cross-sectional planes formed perpendicularly to the tyre axis, as following a straight line and inclined to form an angle α of 2° ≤ α ≤ 8° in relation to the radial direction R of the tyre.

3. Tread profile according to the features of one of the preceding claims, the groove wall (6) being formed in the radial region of extent between the groove base (8) and the radially inner rib flank (14), in the cross-sectional planes formed perpendicularly to the tyre axis, as following a straight line and inclined to form an angle β of 30° ≤ β ≤ 60° in relation to the radial direction R of the tyre.

4. Tread profile according to the features of either of Claims 1 and 2, the groove wall (6) being formed in the radial region of extent (11) between the groove base (8) and the radially inner rib flank (14), in the cross-sectional planes formed perpendicularly to the tyre axis, as curved about a centre of curvature M₁, lying on the side facing from the groove wall (6) towards the groove (5).

5. Tread profile according to the features of one of the preceding claims, the groove wall (6) being made to extend in the radial region of extent (10) between the radially outer surface (9) and the radially outer rib flank (13), in the cross-sectional planes formed perpendicularly to the tyre axis, over a height hₐ, measured in the radial direction R, and the groove wall (6) being made to extend in the radial region of extent (11) between the groove base (8) and the radially inner rib flank (14) over a height h₁, measured in the radial direction R, where (1.1 hₐ) ≥ hᵢ ≥ (0.9 hₐ).

6. Tread profile according to the features of one of the preceding claims, the height of extent h being formed with 1 mm ≤ h ≤ 3 mm.

7. Tread profile according to the features of one of the preceding claims, the radially outer rib flank (13) being formed as running from the groove wall (6) towards the groove (5) and inclined radially outwards at an angle γ in relation to the circumferential direction U and the radially inner rib flank (14) being formed as running from the groove wall (6) towards the groove (5) and inclined radially outwards at an angle δ in relation to the circumferential direction U, where δ > γ.

8. Tread profile according to the features of one of the preceding claims, additional web-shaped elevations (16, 17), made to extend in the radial direction R, being formed in the groove wall (6) along the extent of the transverse groove (5), at the distance d - in particular where 15 mm ≤ d ≤ 30 mm - from one another radially above and/or radially below the rib (12), and extending from the rib (12) in the radial direction R.

9. Tread profile according to the features of one of the preceding claims, the web-shaped elevations (16, 17) having their maximum web height at the rib flank (13, 14) and the web height decreasing along the radial extent with increasing distance from the rib flank (16, 17), the web height in each radial position of the tyre being the respective maximum height of elevation in relation to the groove wall (6).

## Revendications

1. Profilé de bande de roulement d'un bandage pneumatique de véhicule comprenant des gorges périphériques, qui délimitent dans la direction axiale A du bandage des rangées de blocs profilés (1) et/ou des nervures profilées avec au moins une rangée de blocs profilés (1) réalisée à partir d'éléments de blocs profilés (4) rehaussés radialement et disposés les uns derrière les autres dans la direction périphérique U, lesquels éléments de blocs profilés sont séparés les uns des autres par des gorges (5) s'étendant transversalement ou obliquement, chacune de ces gorges (5) étant limitée dans la direction radiale R vers l'intérieur par une base de gorge (8) et dans la direction périphérique U du bandage par une paroi de gorge (6, 7), qui s'étend dans la direction radiale R depuis la base de gorge vers l'extérieur jusqu'à la surface (9) limitant radialement vers l'extérieur l'élément de bloc profilé (4) limité par elle, et qui forme le flanc de cet élément de bloc profilé (4) orienté vers la gorge (5),
**caractérisé en ce que**
le long de toute l'étendue de la gorge (5) est réalisée une paroi de gorge (6), depuis la surface (9) limitant radialement vers l'extérieur l'élément de bloc profilé (4) limité, à une distance radialement vers l'intérieur, et depuis la base de gorge (8) de la gorge (5), à une distance radialement vers l'extérieur, avec une nervure (12) rehaussée depuis la paroi de gorge (6) vers la gorge (5), laquelle nervure est orientée avec sa direction d'étendue longitudinale vers la paroi de gorge (6) en s'étendant le long de l'étendue de la gorge (5), la nervure (12) étant rehaussée dans son contour en coupe dans les sections transversales formées perpendiculairement à l'axe du bandage avec ses deux flancs de nervures (13, 14) à chaque fois depuis la paroi de gorge (6) et la nervure (12) étant limitée au niveau des extrémités des flancs de nervures (13, 14) espacées de la paroi de gorge (6) du côté tourné vers la gorge (5) par un contour de ligne de coupe (15) rectiligne, reliant les flancs de nervures (13, 14), d'une hauteur d'étendue h>0 mesurée dans la direction radiale R.

2. Profilé de bande de roulement selon les caractéristiques de la revendication 1,
dans lequel la paroi de gorge (6) est réalisée dans la région d'étendue radiale (10) entre la surface radialement extérieure (9) et le flanc de nervure radialement extérieur (13) dans les plans en section transversale réalisés perpendiculairement à l'axe du bandage, en ligne droite sous forme inclinée en formant un angle α de 2° ≤ α ≤ 8° par rapport à la direction radiale R du bandage.

3. Profilé de bande de roulement selon les caractéristiques de l'une quelconque des revendications précédentes,
dans lequel la paroi de gorge (6) est réalisée dans la région d'étendue radiale entre la base de gorge (8) et le flanc de nervure radialement interne (14) dans les plans en section transversale réalisés perpendiculairement à l'axe du bandage, en ligne droite sous forme inclinée en formant un angle β de 30°≤β≤60° par rapport à la direction radiale R du bandage.

4. Profilé de bande de roulement selon les caractéristiques de l'une quelconque des revendications 1 à 2,
dans lequel la paroi de gorge (6) est réalisée dans la région d'étendue radiale (11) entre la base de gorge (8) et le flanc de nervure radialement interne (14) dans les plans en section transversale réalisés perpendiculairement par rapport à l'axe du bandage, sous forme courbée autour d'un centre de courbure M₁ situé du côté tourné depuis la paroi de gorge (6) vers la gorge (5).

5. Profilé de bande de roulement selon les caractéristiques de l'une quelconque des revendications précédentes,
dans lequel la paroi de gorge (6) s'étend dans la région d'étendue radiale (10) entre la surface radialement extérieure (9) et le flanc de nervure radialement extérieur (13) dans les plans en section transversale réalisés perpendiculairement à l'axe du bandage sur une hauteur hₐ mesurée dans la direction radiale R et la paroi de gorge (6) s'étend dans la région d'étendue radiale (11) entre la base de gorge (8) et le flanc de nervure radialement intérieur (14) sur une hauteur hᵢ mesurée dans la direction radiale R avec (1,1 hₐ) ≥ hᵢ ≥ (0,9 hₐ).

6. Profilé de bande de roulement selon les caractéristiques de l'une quelconque des revendications précédentes,
dans lequel la hauteur d'étendue h est réalisée avec 1 mm ≤ h ≤ 3 mm.

7. Profilé de bande de roulement selon les caractéristiques de l'une quelconque des revendications précédentes,
dans lequel le flanc de nervure radialement extérieur (13), partant de la paroi de gorge (6) jusqu'à la gorge (5), est incliné radialement vers l'extérieur suivant un angle γ par rapport à la direction périphérique U et le flanc de nervure radialement intérieur (14), partant de la paroi de gorge (6) jusqu'à la gorge (5), est réalisé en s'étendant de manière inclinée radialement vers l'extérieur suivant un angle δ par rapport à la direction périphérique U, avec δ > γ.

8. Profilé de bande de roulement selon les caractéristiques de l'une quelconque des revendications précédentes,
dans lequel des rehaussements supplémentaires (16, 17) en forme de picots dans la paroi de gorge (6) s'étendant dans la direction radiale R sont réalisés le long de l'étendue de la gorge transversale (5) à une distance d - notamment avec 15 mm ≤ d ≤ 30 mm - les uns des autres radialement au-dessus et/ou radialement en dessous de la nervure (12), lesquels rehaussements s'étendent depuis la nervure (12) dans la direction radiale R.

9. Profilé de bande de roulement selon les caractéristiques de l'une quelconque des revendications précédentes,
dans lequel les rehaussements en forme de picots (16, 17) présentent leur hauteur de picot maximale au niveau du flanc de nervure (13, 14) et la hauteur de picot diminue le long de l'étendue radiale avec l'augmentation de la distance au flanc de nervure (16, 17), la hauteur de picot dans chaque position radiale du bandage étant la hauteur de rehaussement respective maximale par rapport à la paroi de gorge (6).
